**Europäisches Patentamt**

(19) **European Patent Office**

**Office européen des brevets**

(11) Veröffentlichungsnummer: **0 132 790**
**B1**

(12) # EUROPÄISCHE PATENTSCHRIFT

(45) Veröffentlichungstag der Patentschrift:
**18.01.89**

(51) Int. Cl.⁴: **G 06 K 19/02**

(21) Anmeldenummer: **84108511.1**

(22) Anmeldetag: **19.07.84**

(54) **Verfahren zur Herstellung eines Teststreifens.**

(30) Priorität: **23.07.83 DE 3326689**

(43) Veröffentlichungstag der Anmeldung:
**13.02.85 Patentblatt 85/7**

(45) Bekanntmachung des Hinweises auf die Patenterteilung:
**18.01.89 Patentblatt 89/3**

(84) Benannte Vertragsstaaten:
**AT BE CH DE FR GB IT LI LU NL SE**

(56) Entgegenhaltungen:
**EP-A- 0 073 056**
**EP-A- 0 129 220**
**US-A- 3 662 362**

(73) Patentinhaber: **BOEHRINGER MANNHEIM GMBH,
Sandhofer Strasse 116, D-6800 Mannheim 31 (DE)**

(72) Erfinder: **Kasielke, Joachim,
Anton-Bruckner-Strasse 24, D-6831 Brühl (DE)**
Erfinder: **Macho, Heinz Kurt, Ortsstrasse 42,
D-6149 Fürth/Fahrenbach (DE)**
Erfinder: **Nenninger, Klaus, Lilienstrasse 36,
D-6800 Mannheim 71 (DE)**
Erfinder: **Schäfer, Peter Gerd Karl, Wanderstrasse 35,
D-6700 Ludwigshafen (DE)**
Erfinder: **v. Rijkevorsel, Rainer, Freiburger Strasse 3,
D-6831 Brühl (DE)**

ACTORUM AG

**Beschreibung**

Die Erfindung bezieht sich auf ein Verfahren zum Herstellen eines Teststreifens, der üblicherweise einen langgestreckten Träger aus Kunststoffmaterial und mindestens ein Testfeld aufweist. Zu seiner Herstellung wird auf einem breiten Band des Trägermaterials parallel zu dessen Längskanten ein Band aus Testfeldmaterial angeordnet, das Band des Trägermaterials wird mit einer Datenmenge zur Speicherung von Informationen versehen und das Gesamtband wird quer zur Produktionsrichtung in eine Vielzahl von langgestreckten Teststreifen unterteilt.

In der europäischen Patentanmeldung mit der Publikationsnummer 73 056 ist ein derartiges Verfahren und auch der entsprechende Analysestreifen beschrieben. Mittels derartiger Teststreifen können analytische Bestimmungen, insbesondere für medizinische Zwecke, bei besonders einfacher Handhabung durchgeführt werden. So werden beispielsweise Urinteststreifen im allgemeinen kurz in die Flüssigkeit eingetaucht und anschliessend einfach abtropfen gelassen.

Für Blutuntersuchungen wird auf das Testfeld normalerweise ein Blutstropfen aufgegeben und nach dem Vollsaugen des Testfeldes der Rest abgewischt. In dem Testfeld erfolgt eine chemische Reaktion zwischen den dort vorhandenen Reagenzien und den Inhaltsstoffen der aufgebrachten Körperflüssigkeit. Die eintretende Farbveränderung wurde früher visuell ausgewertet, doch stehen heute zur quantitativen Auswertung der Farbveränderung auch entsprechende Geräte zur Verfügung. So werden vor allem Reflexionsphotometer eingesetzt, mittels welchen der Reflexionsgrad des Testfeldes nach Ablauf der Reaktion bei einer oder mehreren Wellenlängen bestimmbar ist. Die Testfelder bestehen üblicherweise aus mit geeigneten Reagenzien getränkten und getrockneten Papieren bzw. Vliesen oder Reaktionsfilmen, selbsttragend oder auf Folien beschichtet. Zur Speicherung und Erfassung der für die Auswertung massgebenden Daten der einzelnen Herstellungschargen ist bei dem bekannten Teststreifen auf der Unterseite ein Strichcode angeordnet. Dieser Strichcode enthält chargenspezifische Informationen, insbesondere eine geeignete mathematische Funktion zur Berechnung der jeweiligen Abhängigkeit der Konzentration der zu analysierenden Substanz von dem jeweiligen Reflexionsgrad. Informationen über die Lage der Funktionskurve, über chargenspezifische Korrekturen und dergl. können in einem entsprechenden Reflexionsmessgerät gelesen und insbesondere mittels eines Mikroprozessors in geeigneter Weise verarbeitet werden.

Während die Codierung mit Hilfe eines Strichcodes für manche einfachere Tests ausreichend ist, erfordert die weitere Entwicklung von Teststreifen für die verschiedensten Blut- und Serumparameter die Speicherung einer Datenmenge in der Grössenordnung von wenigstens 500 Bit. Bei Teststreifen der vorliegenden Art, die eine Länge von etwa 10 cm aufweisen, kann mit Hilfe der Strichcodierung jedoch lediglich eine Datenmenge in der Grössenordnung von 50 Bit gespeichert werden; eine grössere Datenmenge würde entweder einen entsprechend langen Teststreifen voraussetzen oder aber die Striche müssten extrem fein aufgebracht werden, wofür in der Praxis keine geeigneten Druck- oder Prägesysteme vorhanden sind.

Bei der Suche nach einer Möglichkeit zur Aufbringung einer grösseren Datenmenge auf den Teststreifen sind die schwierigen Randbedingungen zu beachten, die sich aus der Besonderheit dieses Produkts und seiner Fertigung ergeben. Zum einen steht auf den Teststreifen wegen ihrer geringen Grösse nur sehr wenig Platz für das Aufbringen von Daten zur Verfügung. Auf einem typischen Teststreifen ist die für die Informationsaufbringung nutzbare Länge auf etwa 4 cm beschränkt. Deswegen ist eine hohe Informationsdichte notwendig. Zum zweiten führte die Tatsache, dass Teststreifen ein in sehr grossen Stückzahlen hergestelltes Produkt sind, dazu, dass das Herstellungsverfahren schnell und kostengünstig ablaufen muss. Typischerweise werden etwa 400 Teststreifen/min. produziert, so dass auch die Codierung in entsprechender Geschwindigkeit aufgebracht werden muss. Die Umweltbedingungen in der Teststreifenfertigung sind für ein empfindliches Verfahren der Informationsaufbringung ungünstig.

Der Erfindung liegt daher die Aufgabe zugrunde, zur Herstellung eines Teststreifens der genannten Art ein Verfahren vorzuschlagen, welches eine rationelle und kostengünstige Aufbringung einer Datenmenge insbesondere in der Grössenordnung von wenigstens 500 Bit, ermöglicht. Die Datenmenge soll zuverlässig auf dem Teststreifen angeordnet sein und eine funktionsgerechte Abtastung in einem Auswertegerät soll bei einer leichten Handhabbarkeit gewährleistet sein. Im Hinblick auf eine rationelle Fertigung der Teststreifen in grossen Stückzahlen soll das Aufbringen der Datenmenge in kurzer Zeit erfolgen.

Diese Aufgabe wird bei dem Verfahren der eingangs genannten Art durch die Merkmale gemäss dem kennzeichnenden Teil des Hauptanspruchs gelöst. Die Teilschritte müssen nicht in unmittelbarer Aufeinanderfolge und die Teilschritte a und b auch nicht in der angegebenen Reihenfolge ausgeführt werden. Die Erfindung richtet sich auch auf einen Teststreifen, der eine Schicht in Form eines Magnetbandes aufgebrachten magnetisierbaren Materials aufweist, in welche die Datenmenge in seiner Längsrichtung aufgezeichnet ist. Dabei ist die Schicht bevorzugt auf der den Testfeldern gegenüberliegenden Seite des Teststreifens und auch in Längsrichtung entfernt von diesen vorgesehen. Der Teststreifenträger weist an beiden Enden jeweils eine Ausnehmung auf. Die Ausnehmungen sind bevorzugt kreisrunde Löcher. Im folgenden wird ohne Beschränkung der Allgemeinheit zur Vereinfachung nur der Ausdruck «Loch» statt «Ausnehmung» verwendet.

Ein ähnlicher Teststreifen ist in der älteren Anmeldung EP-A-129 220 offenbart. Dieser Anmeldung, die zum Stand der Technik gemäss Artikel 54(3,4) gehört, ist aber nicht zu entnehmen, dass die Magnetschicht ein aufgebrachtes Magnetband ist.

Durch die einfachen erfindungsgemässen Massnahmen gelingt es, trotz grosser entgegenstehender Schwierigkeiten die für andere Anwendungszwecke (vgl. zum Beispiel US-Patentschrift 3 662 362) vorbekannte Magnetcodierung im Rahmen der Analytik mit trägergebundenen Tests anwendbar zu machen. Damit wird die auf einem einzigen Teststreifen speicherbare Informationsmenge so gross, dass alle für die Auswertung eines bestimmten Testtträgers notwendigen Informationen dem Auswertegerät jeweils zur Verfügung gestellt und vor jeder Auswertung maschinell gelesen werden können. Dadurch werden nicht nur die bei den bekannten Verfahren möglichen Verwechslungen zuverlässig ausgeschlossen. Die Steuerung des Geräts über die auf dem Teststreifen enthaltene Information ermöglicht es sogar, mit einem beim Anwender vorhandenen, universell einsetzbaren Auswertegerät selbst solche Teststreifen noch zu vermessen, die erst nach der Herstellung des Geräts entwickelt wurden und eine gegenüber den ursprünglichen Testträgern abgewandelte, dem Gerät jedoch in codierter Form mitteilbare Auswerteprozedur erfordern.

Das erfindungsgemässe Verfahren ermöglicht bei einem hohen Ausstoss eine zuverlässige Herstellung der Teststreifen bei einer sicheren Aufbringung auch und gerade einer grossen Datenmenge in der Grössenordnung von wenigstens 500 Bit. Mittels der Lochreihen wird eine gute Führung des Bandes des Trägermaterials bzw. auch des Gesamtbandes während der Herstellung erreicht. Durch jeweils zwei quer zur Produktionsrichtung, vorzugsweise einander gegenüberliegende Löcher, wird eine definierte Achse in Längsrichtung des jeweiligen Teststreifens vorgegeben. Diese Achse liegt quer zur Produktionsrichtung und die Aufbringung der Datenmenge in die genannte magnetisierbare Schicht erfolgt sehr exakt in der genannten Richtung. Auch für das Lesen der Datenmenge mittels des Auswertegerätes ist durch die genannten beiden Löcher eine exakte geometrische Achse vorgegeben. Ein Winkelversatz zwischen der Schreibrichtung bei der Produktion und der Leserichtung wird in besonders einfacher Weise vermieden. Die Lochreihen des Bandes des Trägermaterials bzw. die jeweils an den Enden eines fertigen Teststreifens befindlichen Löcher ergeben eine exakte Positionierung und Ausrichtung des Bandes bzw. des Teststreifens. Erfindungsgemäss wird das Band jeweils quer zur Produktionsrichtung zwischen den äquidistanten Löchern der beiden Lochreihen in die jeweiligen länglichen Teststreifen geschnitten.

In einer besonders wesentlichen Ausgestaltung wird vor dem Zerschneiden des Gesamtbandes die aufgebrachte Datenmenge zu Prüfzwecken gelesen, wobei nach Feststellung eines Fehlers eine geeignete Markierung vorgesehen wird, um nach dem Zerschneiden den fehlerhaften Teststreifen aussortieren zu können. Eine solche Markierung wird insbesondere in Form eines Farbpunktes vorgesehen, um ein einfaches und zuverlässiges Aussortieren zu ermöglichen. Es kann aber auch eine andere Markierung, beispielsweise auch eine nichtoptische, z.B. magnetische verwendet werden.

In einer besonderen Ausgestaltung wird die Schicht des magnetisierbaren Materials in Form eines vorgefertigten Magnetbandes durch Kleben, Schmelzkleben oder dergl. aufgebracht. Im Rahmen der Erfindung kann dies vor, während oder auch nach Aufbringung des Bandes des Testfeldmaterials erfolgen. Die Verbindung des vorgefertigten Magnetbandes mit dem Trägerband erfordert keinen besonderen Aufwand, wobei das Magnetband selbst kostengünstig zu fertigen bzw. zu beziehen ist. Es sei ausdrücklich hervorgehoben, dass im Rahmen der Erfindung auch eine direkt auf das Trägerband aufgebrachte Magnetschicht liegt.

In einer besonderen Weiterbildung wird die Schicht magnetisierbaren Materials so auf dem Trägermaterial angeordnet, dass es quer zu dessen Transportrichtung einen Abstand von dem auf der Oberseite vorgesehenen Testfeldmaterial hat. Insbesondere wird es auf der Unterseite des Trägers angeordnet. Es besteht also zwischen der Magnetschicht und dem Testfeldmaterial ein geeigneter Abstand, so dass eine unerwünschte gegenseitige Beeinflussung während der Herstellung vermieden wird. So beeinflusst beispielsweise eine notwendige Erwärmung zum Aufbringen des Magnetbandes das Testfeldmaterial nicht. Eine derartige Anordnung der Magnetschicht ist auch von besonderem Vorteil beim Lesen der in die Magnetschicht aufgezeichneten Information in einem Gerät zur Auswertung des Teststreifens. Sie ermöglicht es, den dabei verwendeten Magnetlesekopf in engem Kontakt zu der Magnetschicht zu halten und dadurch die Information zuverlässig zu lesen.

Um einen hohen Ausstoss bei der Herstellung zu erhalten, werden mittels wenigstens zwei Schreibköpfen gleichzeitig wenigstens zwei Magnetspuren der Datenmengen quer zur Produktionsrichtung aufgezeichnet. Durch die im Nachhinein als einfach erscheinende Massnahme wird eine wesentliche Erhöhung des Ausstosses bei der Herstellung der Teststreifen erreicht.

Um eine einfach aufgebaute Vorrichtung zur Durchführung des Verfahrens zu erhalten, erfolgt das Aufbringen der Datenmenge während des Stillstandes des Gesamtbandes.

Die Bewegung des Gesamtbandes erfolgt synchronisiert mit dem Aufbringen der Datenmenge im Taktbetrieb, wobei die Bewegung in Produktionsrichtung immer wieder gestoppt wird und während dieser Pausen die Datenmenge aufgebracht wird. Der oder die Schreibköpfe sowie evtl. Leseköpfe müssen mit einer geeigneten Einrichtung lediglich quer zur Transportrichtung bewegbar sein, so dass insoweit ein vergleichweise geringer Aufwand erforderlich wird. Im Rahmen der Erfindung erfolgt der Vorschub des Gesamtbandes immer dann, wenn ein den Schreibkopf bzw.

die Schreibköpfe aufnehmender Schlitten oder dergl. nach dem Aufbringen der Datenmenge in seine Ausgangsposition zurückgefahren wird.

In einer wesentlichen Ausgestaltung wird beim Aufbringen einer neuen Datenmenge gleichzeitig auch die in einem vorhergehenden Verfahrensschritt aufgebrachte Datenmenge gelesen. Dadurch ist für das Lesen mittels eines geeigneten Lesekopfes keine zusätzliche Zeit erforderlich. Schreib- und Lesekopf bzw. Schreib- und Leseköpfe werden mittels einer geeigneten Vorrichtung gemeinsam bewegt, so dass insoweit ein geringer apparativer Aufwand erforderlich ist.

In einer besonderen Ausgestaltung ist die Schreibgeschwindigkeit, mit welcher die Datenmenge während der Herstellung eingegeben wird, um einen vorgegebenen Faktor grösser als die Lesegeschwindigkeit, mit welcher die Datenmenge in einem Auswertegerät von den Teststreifen gelesen wird. Die Herstellung einer grossen Stückzahl pro Zeiteinheit bzw. eine kostengünstige Fertigung des einzelnen Teststreifens wird somit erreicht, wobei die Kosten für eine hochgenaue und schnelle Vorrichtung sich auf die entsprechend grosse Stückzahl der Messstreifen umlegen lassen. Das Auswertegerät kann hingegen eine vergleichsweise einfache Konstruktion aufweisen, wobei keine zu hohen Anforderungen im Hinblick auf die Abtastung der Datenmenge aufgrund der niedrigen Lesegeschwindigkeit gestellt werden müssen.

Um eine funktionsgerechte und eine zuverlässige Vorrichtung zur Durchführung des Verfahrens zu schaffen, wird vorgeschlagen, dass eine Antriebseinheit mit einem quer zur Produktionsrichtung des Bandes des Trägermaterials bewegbaren Schlitten vorgesehen ist, auf welchem wenigstens ein Schreibkopf zum Aufbringen der Datenmenge vorgesehen ist. Diese Antriebseinheit wird derart angesteuert, dass bei Stillstand des genannten Bandes die Querbewegung des Schreibkopfes erfolgt, wobei gleichzeitig auch die Datenmenge aufgebracht wird. Danach wird das Band in Produktionsrichtung weiter transportiert und gleichzeitig auch der Schlitten mit dem Schreibkopf in seine Ausgangsposition zurückgefahren. Es wird eine quasi kontinuierliche Produktion erreicht, wobei jedoch aufgrund der erfindungsgemässen stop-go-Betriebsweise eine besonders einfache Konstruktion für die Antriebseinheit erreicht wird.

In einer zweckmässigen Weiterbildung sind auf dem bewegbaren Schlitten wenigstens zwei Schreib- und Leseköpfe angeordnet, welche in der Transportrichtung des Gesamtbandes einen Abstand voneinander haben. Der Abstand ist hierbei auf den Lochabstand des Bandes mit dem Trägermaterial abgestimmt. Eine rationelle Fertigung wird hierdurch gewährleistet.

In einer besonderen Ausführungsform ist der Schlitten mittels eines Sinusantriebs bewegbar, der bevorzugt auf einer Oberfläche einer Antriebswelle eine sinusförmige Führungsbahn für den Schlitten aufweist. Die Antriebswelle dreht nur in einer einzigen Drehrichtung, wobei der Schlitten die Hin- und Herbewegung quer zur Transportrichtung durchführt. Es ist ersichtlich, dass eine derartige Antriebseinheit eine hohe Funktionssicherheit gewährleistet und eine schnelle und zuverlässige Aufbringung der Datenmenge bei einer einfachen Konstruktion ermöglicht.

Da bei Verwendung eines Sinusantriebs der Schlitten mit den Schreibköpfen nichtlinear bewegt wird, ist bei dieser bevorzugten Ausführungsform eine Einrichtung vorgesehen, um den Takt des Schreibvorgangs entsprechend der Schlittenbewegung zu synchronisieren. Dieses schliesst einen mit dem Schlitten fest verbundenen, insbesondere optischen Linearmassstab zur Erzeugung einer der jeweiligen Schlittenbewegungsgeschwindigkeit proportionalen Taktfrequenz ein. Diese Takte werden zum Schreiben der digitalen Information auf dem Magnetstreifen benutzt, so dass diese im Bereich der langsamen Schlittenbewegung langsam und im Bereich der schnellen Schlittenbewegung schnell erfolgt. Im Ergebnis ist dadurch die Aufbringung der Information auf dem Teststreifen trotz der nichtlinearen Schlittenbewegung räumlich linear.

Ein mit dem Schlitten verbundener Linearmassstab kann alternativ auch dazu verwendet werden, den Schlittenantrieb elektronisch so zu steuern, dass die Schlittenbewegung in dem zur Magnetaufzeichnung herangezogenen Bereich linear verläuft.

Damit beim Aufzeichnen der Datenmenge eine definierte Ausrichtung und Auflage des Bandes mit dem Trägermaterial gewährleistet wird, wird ferner vorgeschlagen, dass mittels einer, bevorzugt pneumatischen Einrichtung das genannte Band an eine Bodenplatte oder dergleichen angedrückt wird. Die hierdurch erreichte plane Auflage des genannten Bandes stellt einen guten Kontakt zwischen Schreibkopf und Magnetschicht sicher.

In einer besonderen Ausführungsform ist der Schreibkopf auf dem bewegbaren Schlitten mittels eines elastischen Federelements angeordnet, welches einerseits eine exakte Ausrichtung quer zur Produktionsrichtung und andererseits eine geeignete Andruckkraft in Richtung auf das Band ergibt. Gegebenenfalls können auch zusätzliche Federelemente vorgesehen sein, um die Andruckkraft zu erzeugen. In einer besonderen Weiterbildung ist das elastische Federelement als eine Blattfeder ausgebildet, welche quer zur Produktionsrichtung und beabstandet vom Schreib- und Lesekopf Ausnehmungen aufweist. Eine derartige Blattfeder ergibt zum einen eine definierte Ausrichtung des Schreib- oder Lesekopfes quer zur Transportrichtung. Darüberhinaus wird aufgrund der Ausnehmungen eine hinreichende Schwenkbarkeit um die Längsachse der Blattfeder zugelassen, so dass insoweit eine Anpassung an Unebenheiten oder dergleichen ermöglicht wird. Eine hohe Zuverlässigkeit bei der Aufzeichnung der Datenmengen wird erreicht.

Weitere erfindungswesentliche Merkmale und Vorteile ergeben sich aus den nachfolgend anhand der Zeichnung näher erläuterten Ausführungsbeispielen. Es zeigen:

Fig. 1 eine schematische Darstellung einer Vorrichtung zur Durchführung des Verfahrens,

Fig. 2 eine Aufsicht einer besonderen Antriebseinheit, die einen quer zur Transportrichtung bewegbaren Schlitten mit Schreib- und Leseköpfen aufweist,

Fig. 3 eine Ansicht der Antriebseinheit nach Fig. 2 in Produktionsrichtung teilweise als Schnitt entlang Schnittlinie III in Fig. 2

Fig. 4 eine Ansicht in Blickrichtung IV gemäss Fig. 3 einer Platte des Schlittens mit mehreren Schreib- und Leseköpfen

Fig. 5 eine seitliche Ansicht der Platte gemäss Fig. 4.

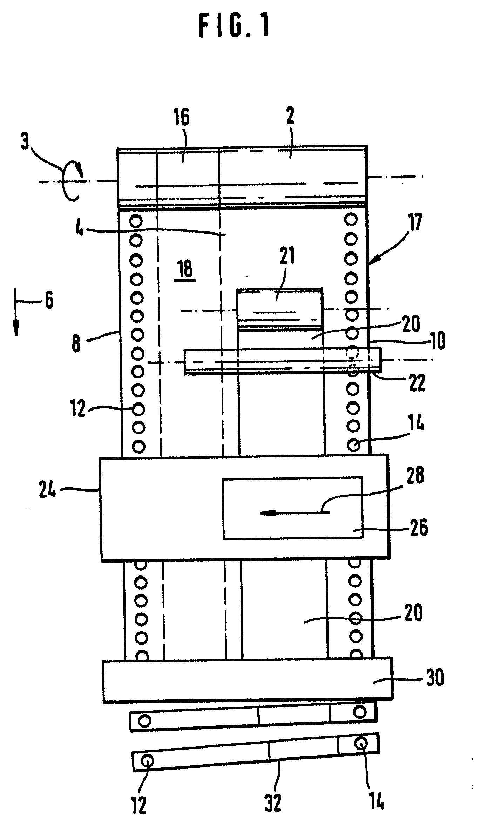

Fig. 1 zeigt schematisch in einer Aufsicht eine Vorrichtung zur Durchführung des Verfahrens. Auf einer Rolle 2 ist ein Band des Trägermaterials angeordnet, welches in einer durch einen Pfeil 3 angedeuteten Produktionsrichtung abwickelbar ist. Das Band 4 weist im Bereich seiner Längskanten 8, 10 jeweils eine Reihe von äquidistanten Löchern 12, 14 auf. Mit dem Band 4 wird zur Bildung des Gesamtbandes 17 ein Band 16 eines Testfeldmaterials verbunden, wobei letzteres wesentlich schmaler ist als das Band 4 des Trägermaterials. Auf die hier sichtbare Unterseite 18 des Bandes 4 wird in Form eines Magnetbandes eine Schicht 20 aus magnetisierbarem Material aufgebracht. Dies kann mittels einer hier rein schematisch dargestellten Walzenanordnung 21, 22 und/oder durch Schmelzkleben oder durch sonstige Verfahren erfolgen. Es sei ausdrücklich hervorgehoben, dass das Aufbringen der magnetisierbaren Schicht, die Einbringung der genannten Lochreihen, und auch das Verbinden des Testfeldmaterials mit dem Band des Trägermaterials in der jeweils zweckmässigen Reihenfolge durchgeführt werden kann und gegebenenfalls auch in getrennten Arbeitsläufen und/oder an verschiedenen Orten durchgeführt werden kann.

Einer Antriebseinheit 24 wird das Band 4 des Trägermaterials gemeinsam mit der Schicht 20 und dem Band 16 des Testfeldmaterials zugeführt. Diese Antriebseinheit 24 weist geeignete Transportmittel auf, die im Zusammenwirken mit den Löchern 12, 14 den Transport des Bandes in der Produktionsrichtung 6 ermöglichen. Ferner weist die Antriebseinheit 24 einen quer zur Produktionsrichtung 6 hin- und herbewegbaren Schlitten 26 auf, welcher seinerseits wenigstens einen Schreibkopf zum Aufbringen der jeweiligen Datenmenge in die Schicht 20 des magnetisierbaren Materials hat. Bei der Bewegung des Schlittens in Richtung des Pfeiles 28 wird die Datenmenge aufgebracht, wobei gleichzeitig das Band 4 stillsteht. Nachfolgend wird das Band 4 weitertransportiert und gleichzeitig wird der Schlitten 26 in der entgegengesetzten Richtung in die Ausgangsposition zurückbewegt.

In Produktionsrichtung hinter der Antriebseinheit befindet sich eine Schneideeinrichtung 30, mittels welcher die einzelnen Teststreifen 32 geschnitten werden. Diese erfindungsgemäss hergestellten, länglichen Teststreifen 32 weisen jeweils an ihrem Ende ein Loch 12, 14 auf. Diese Löcher 12, 14 definieren eine Bezugsrichtung, die sowohl bei der Aufzeichnung der Datenmenge als auch beim Auswerten der Datenmenge in einem Auswertegerät massgebend ist. Mittels der genannten Lochreihen wird eine exakte Ausrichtung des Bandes 4 bezüglich der Antriebseinheit erreicht, wodurch eine hohe Winkelgenauigkeit beim Aufzeichnen sichergestellt ist. Selbst wenn beim Schneiden mittels der Schneideeinrichtung herstellungsbedingte Ungenauigkeiten eintreten, so haben diese keinen Einfluss auf die Genauigkeit beim Lesen der Datenmenge in einem Auswertegerät, da die Bezugsrichtung mittels der Löcher 12, 14 im Teststreifen definiert vorgegeben ist.

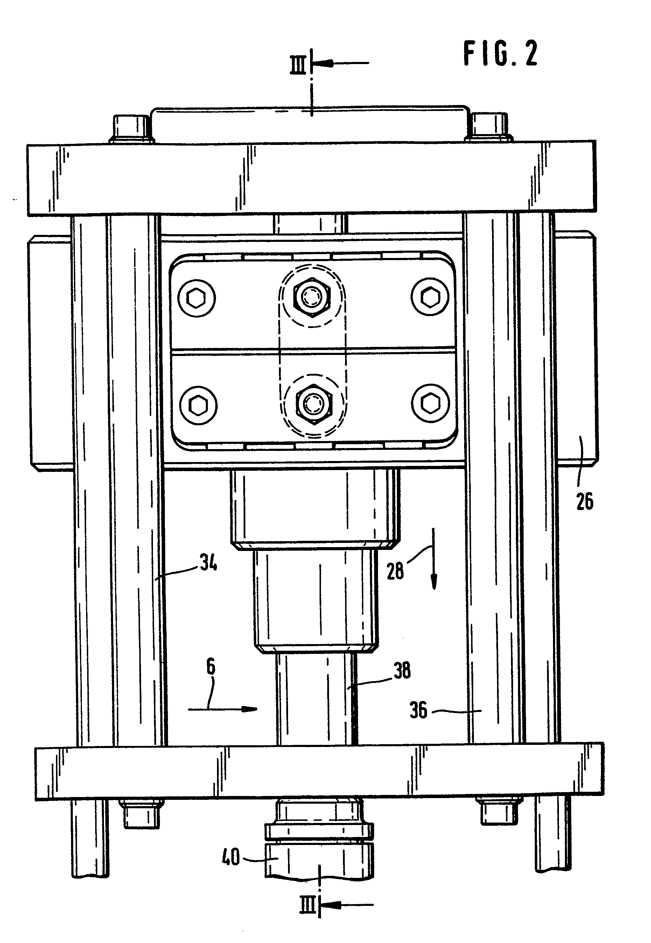

Fig. 2 zeigt teilweise eine besondere Ausführungsform der Antriebseinheit 24, welche zur Führung des Schlittens 26 bei der Bewegung quer zur Transportrichtung 6 zwei Führungstangen 34, 36 aufweist. Eine Antriebswelle 38 steht über eine Kupplung 40 mit einem hier nicht weiter dargestellten elektrischen Motor in Verbindung. Die Drehung der Antriebswelle bewirkt eine Hin- und Herbewegung des Schlittens in Richtung des Pfeiles 28. Zweckmässig ist ein nachfolgend noch zu erläuternder Sinusantrieb vorgesehen, doch können im Rahmen der Erfindung auch andere Antriebssysteme zum Einsatz gelangen.

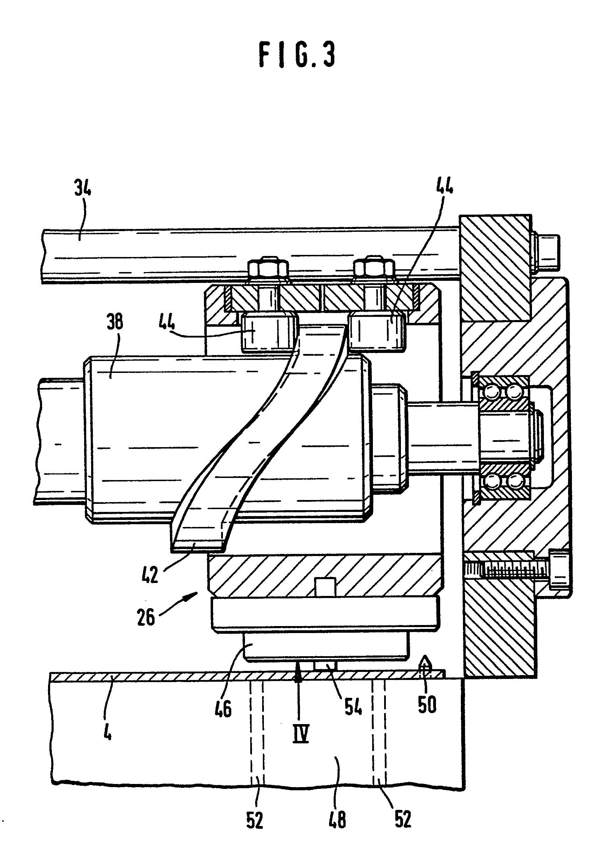

Fig. 3 zeigt eine Ansicht der Antriebseinheit teilweise im Schnitt entlang der Schnittlinie III gemäss Fig. 2. Auf der Aussenfläche der Antriebswelle 38 ist hier teilweise eine sinusförmige Führungsbahn 42 zu erkennen. Diese Führungsbahn 42 schliesst sich hinter der Zeichenebene. Der Schlitten 26 weist mit der Führungsbahn 42 in Eingriff stehende Rollen 44 auf. Bei Drehen der Antriebswelle 38 in einer Drehrichtung führt der Schlitten 26 die erforderliche Hin- und Herbewegung aus. Erfindungsgemäss erfolgt das Aufzeichnen der Datenmenge bei einer im wesentlichen gleichförmigen Bewegung des Schlittens. Mit der vorgesehenen Antriebseinheit kann der schwere Schlitten zugleich sehr schnell bewegt und präzise geführt werden, um eine hohe Arbeitsgeschwindigkeit zu erreichen. Die Aufbringung der Datenmenge wird entsprechend der Bewegung des Schlittens 26 synchronisiert, wobei die Bewegung des Schreibkopfes mit einem Linearmassstab abgetastet wird. In der Zeichnung ist eine Platte 46 zu erkennen, die sich vertikal über einer horizontal ausgerichteten Bodenplatte 48 befindet. Mittels konischer Stifte 50, welche in die oben erläuterten Löcher 12, 14 des Bandes 4 eingreifen, erfolgt eine definierte Ausrichtung des Bandes 4. In der Bodenplatte 48 sind Löcher 52 vorhanden, die ein pneumatisches Ansaugen des Bandes 4 an die Bodenplatte ermöglichen. An der Unterseite der Platte 46 ist hier ein Schreibkopf 54 zu erkennen.

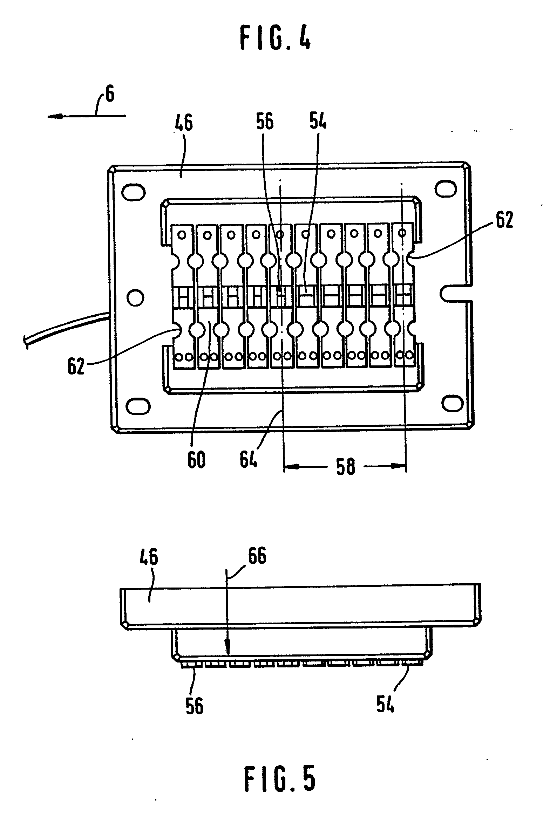

Fig. 4 zeigt eine Ansicht der Platte 46 des Schlittens, wobei hier in Produktionsrichtung (Pfeil 6) nebeneinander jeweils 5 Schreibköpfe 54 sowie fünf Leseköpfe 56 angeordnet sind. Mittels der Schreibköpfe 54 werden also gleichzeitig in fünf Spuren parallel nebeneinander fünf Datenmengen aufgezeichnet. Nach dem Transport des hier nicht dargestellten Bandes 4 entsprechend dem Abstand 58 zwischen dem ersten Schreibkopf 54 und dem ersten Lesekopf 56, befinden sich die genannten Magnetspuren in der Magnetschicht unmittelbar unter den Leseköpfen 56. Bei der nachfolgenden Bewegung des Schlittens und dem Aufzeichnen weiterer Magnetspuren werden mittels der Leseköpfe 56 die zuvor aufgezeichneten Datenmengen der Magnetspuren gelesen. Werden hierbei Fehler festgestellt, so wird eine entsprechende Markierung vorgenommen, so dass nach dem Zerschneiden des Bandes der entsprechende Teststreifen aussortiert werden kann. Die Schreib- und Leseköpfe 54, 56 sind auf länglichen Blattfedern 60 angeordnet, welche seitlich der Schreib- bzw. Leseköpfe 54, 56 Einschnürungen bzw. Ausnehmungen 62 aufweisen. Es ist eine kardanähnliche Aufhängung der Schreib- bzw. Leseköpfe 54, 56 erreicht, wobei in Richtung der Längsachse 64 der Blattfedern 60 eine definierte Ausrichtung gewährleistet ist. Andererseits ist eine hinreichende Bewegbarkeit der Köpfe um die genannte Längsachse 64 und auch senkrecht zur Zeichenebene gegeben. Es sei festgehalten, dass die Längsachse 64 im Rahmen dieser Erfindung mit der durch einander gegenüberliegende Löcher des Bandes des Trägermaterials definierten Achse fluchtet. Die Aufzeichnungsrichtung der Datenmengen stimmt mit der durch einander gegenüberliegende Löcher des Magnetbandes definierten Bezugsrichtung weitestgehend überein, so dass Winkelfehler beim Aufzeichnen zuverlässig vermieden werden.

Fig. 5 zeigt eine seitliche Ansicht der Platte 46 mit den insgesamt zehn Schreib- bzw. Leseköpfen 54, 56. Um ein zuverlässiges Anliegen der Schreib- und Leseköpfe 54, 56 auf der Magnetschicht zu gewährleisten, können zusätzlich zu den oben genannten Blattfedern jeweils weitere Federelemente vorgesehen werden, die in Richtung des Pfeiles 66 die einzelnen Köpfe an die Magnetschicht andrücken, um einen innigen Kontakt zu erhalten.

**Patentansprüche**

1. Verfahren zum Herstellen eines Teststreifens mit einem langgestreckten Träger und einem Testfeld, bei welchem ein Band (16) des Testfeldmaterials auf einem breiteren Band (4) des Trägermaterials parallel zu diesem angeordnet wird, bei welchem das Band (4) des Trägermaterials mit einer Datenmenge zur Speicherung von für die Auswertung des bestimmten Teststreifens notwendigen Informationen versehen wird und bei welchem das Gesamtband (17) quer zur Produktionsrichtung (6) in eine Vielzahl der langgestreckten Teststreifen (32) unterteilt wird, dadurch gekennzeichnet, dass

a) das Band (4) des Trägermaterials im Bereich einer seiner Längskanten (8) eine Reihe erster äquidistanter Ausnehmungen (12) und im Bereich der zweiten Längskante (10) eine Reihe zweiter äquidistanter Ausnehmungen (14) aufweist,

b) auf das Band (4) des Trägermaterials eine Schicht (20) magnetisierbaren Materials aufgebracht ist,

c) die Datenmenge quer zur Produktionsrichtung in die Schicht (20) magnetisierbaren Materials aufgezeichnet wird, wobei das Trägerband mit Hilfe mindestens je einer ersten und zweiten Ausnehmung positioniert und ausgerichtet wird und

d) das Gesamtband (17) dergestalt in die Vielzahl von Teststreifen (32) unterteilt wird, dass jeder Teststreifen mindestens je eine erste und zweite Ausnehmung (12, 14) im Bereich von jedem seiner Enden aufweist.

2. Verfahren nach Anspruch 1, dadurch gekennzeichnet, dass vor dem Zerschneiden des Gesamtbandes (17) die aufgezeichnete Datenmenge zu Prüfzwecken gelesen wird, wobei nach Feststellen eines Fehlers eine Markierung vorgenommen wird, so dass ein fehlerbehafteter Teststreifen nach dem Zerschneiden mittels der Markierung aussortierbar ist.

3. Verfahren nach Anspruch 1 oder 2, dadurch gekennzeichnet, dass die Schicht (20) des magnetisierbaren Materials in Form eines vorgefertigten Magnetbandes durch Kleben oder Schmelzkleben aufgebracht wird.

4. Verfahren nach einem der Ansprüche 1 bis 3, dadurch gekennzeichnet, dass die Schicht (20) des magnetisierbaren Materials mit Abstand von dem Band (16) des Testfeldmaterials bevorzugt auf der diesem gegenüberliegenden Fläche des Bandes (4) des Trägermaterials aufgebracht wird.

5. Verfahren nach einem der Ansprüche 1 bis 4, dadurch gekennzeichnet, dass mittels wenigstens zwei Schreibköpfen (54) gleichzeitig wenigstens zwei Magnetspuren der Datenmenge quer zur Produktionsrichtung (6) aufgezeichnet werden.

6. Verfahren nach einem der Ansprüche 1 bis 5, dadurch gekennzeichnet, dass das Aufzeichnen der Datenmenge und das Lesen der zuvor aufgezeichneten Datenmenge erfolgt, während das Gesamtband stillsteht.

7. Verfahren nach einem der Ansprüche 1 bis 6, dadurch gekennzeichnet, dass die Bewegung des Schreibkopfes (54) zur Aufzeichnung der Daten nichtlinear ist und die Aufzeichnung proportional zur momentanen Geschwindigkeit des Schreibkopfes getaktet wird.

8. Verfahren nach einem der Ansprüche 1 bis 7, dadurch gekennzeichnet, dass das Band (4) des Trägermaterials während der Aufzeichnung der Datenmenge im Bereich des zur Aufzeichnung verwendeten Schreibkopfes, bevorzugt pneumatisch, an eine ebene Bodenplatte (48) angedrückt wird.

9. Verfahren nach einem der Ansprüche 1 bis 8, dadurch gekennzeichnet, dass der zur Aufzeichnung der Datenmenge verwendete Schreibkopf (54) auf einem Schlitten (26) mittels eines elastischen Federelementes angeordnet ist, welches einerseits eine exakte Ausrichtung quer zur Produktionsrichtung (6) und andererseits eine vorgegebene Andruckkraft an die Schicht des Bandes (4) ergibt.

10. Teststreifen zur analytischen Bestimmung von Bestandteilen von Körperflüssigkeiten mit einem langgestreckten flachen Träger mit einem ersten Ende und einem zweiten Ende und einer ersten und zweiten Oberfläche und mit mindestens einem Testfeld in der Nähe des ersten Endes auf der ersten Oberfläche, gekennzeichnet durch eine Schicht in Form eines Magnetbandes aufgebrachten magnetisierbaren Materials, in die eine zur Auswertung des Teststreifens dienende Datenmenge in dessen Längsrichtung aufgezeichnet wird und durch je eine Ausnehmung im Bereich jedes Endes, die so ausgebildet ist, dass sie zum Ausrichten und Positionieren des Teststreifens bei der analytischen Auswertung verwendbar ist.

11. Teststreifen nach Anspruch 10, dadurch gekennzeichnet, dass das Magnetband durch Kleben oder Schmelzkleben aufgebracht ist.

## Claims

1. Process for the production of a test strip with a longitudinally extending carrier and a test field, in which a band (16) of test field material is arranged on a broader band (4) of the carrier material parallel to this, in which the band (4) of the carrier material is provided with an amount of data for the storage of information necessary for the evaluation of the particular test strip and in which the whole band (17) is divided up transversely to the production direction (6) into a plurality of longitudinally extending test strips, characterised in that

a) the band (4) of the carrier material has, in the region of one of its longitudinal edges (8), a row of first equidistant recesses (12) and in the region of the second longitudinal edge (10) has a row of second equidistant recesses (14).

b) on to the band (4) of the carrier material there is applied a layer (20) of magnetisable material,

c) the amount of data is recorded in the layer (20) of magnetisable material transversely to the production direction, whereby the carrier band is positioned and aligned with the help of at least, in each case, a first and second recess and

d) the whole band (17) is divided up into a plurality of test strips (32) in such a manner that each test strip has at least, in each case, a first and second recess (12, 14) in the region of each of its ends.

2. Process according to claim 1, characterised in that, before the cutting up of the whole band (17), the recorded amount of data is read off for testing purposes, whereby, after ascertainment of an error, a marking is carried out so that a faulty test strip can be sorted out after the cutting up by means of the marking.

3. Process according to claim 1 or 2, characterised in that the layer (20) of the magnetisable material is applied in the form of a previously produced magnetic band by adhesion or melt adhesion.

4. Process according to one of claims 1 to 3, characterised in that the layer (20) of the magnetisable material is applied at a distance from the band (16) of the test field material, preferably on the surface of the band (4) of the carrier material lying opposite this.

5. Process according to one of claims 1 to 4, characterised in that, by means of at least two recording heads (54), there are simultaneously recorded, transversely to the production direction (6), at least two magnet tracks of the amount of data.

6. Process according to one of claims 1 to 5, characterised in that the redordal of the amount of data and reading of a previously recorded amount of data takes place while the whole band is stationary.

7. Process according to one of claims 1 to 5, characterised in that the movement of the recording head (54) for the recording of the data is nonlinear and the recording is pulsed proportionally to the momentary speed of the recording head.

8. Process according to one of claims 1 to 7, characterised in that the band (4) of the carrier material is pressed on to a flat base plate (48), preferably pneumatically, during the recordal of the amount of data in the region of the recording head used for the recordal.

9. Process according to any of claims 1 to 8, characterised in that the recording head (54) used for the recordal of the amount of data is arranged on a slider (26) by means of an elastic spring element which gives, on the one hand, an exact alignment transversely to the production direction (6) and, on the other hand, a predetermined pressing-on force on to the layer of the band (4).

10. Test strip for the analytical determination of components of body fluids with a longitudinally extending flat carrier with a first end and a second end and a first and second surface and with at least one test field in the region of the first end on the first surface, characterised by a layer of magnetisable material applied in the form of a magnet band in which is recorded in its longitudinal direction an amount of data serving for the evaluation of the test strip and by, in each case, a recess in the region of each end which is so formed that it is usable for the alignment and positioning of the test strip in the case of the analytical evaluation.

11. Test strip according to claim 10, characterised in that the magnet band is applied by adhesion or melt adhesion.

## Revendications

1. Procédé de fabrication d'une bande de test comportant un support de forme allongée et un champ de test, dans lequel une bande (16) du matériau constituant le champ de test est disposée sur une bande plus large (4) de matériau de support et parallèlement à elle, dans lequel la bande (4) de matériau de support est munie d'un ensemble de données pour la mise en mémoire d'informations nécessaires à l'analyse de la bande de test déterminée et dans lequel la bande totale (17) est subdivisée, dans le sens transversal, par rapport à la direction de fabrication (6), en une pluralité de bandes de test (32) de forme allongée, caractérisé en ce que la bande (4) de matériau de support comporte, dans la zone de l'un de ses bords longitudinaux (8), une première série d'évidements équidistants (12) et, dans la zone de son deuxième bord longitudinal (10), une deuxième série d'évidements équidistants (14), en ce que la bande (4) de matériau de support est recouverte d'une couche (20) de matériau pouvant être aimanté, en ce que l'ensemble de données est inscrit dans le sens transversal par rapport à la direction de fabrication dans la couche (20) du matériau qui peut être aimanté, la bande de support étant positionnée et orientée au moyen d'un évidement au moins de chacune des deux séries, en ce que la bande totale (17) est subdivisée en une pluralité de bandes de test (32) et en ce que chaque bande de test comporte au moins deux évidements (12, 14), l'un de la première et l'autre de la deuxième série, dans chacune des zones de ses extrémités.

2. Procédé selon la revendication 1, caractérisé en ce qu'avant le découpage de la bande totale (17), l'ensemble de données inscrites est lu aux fins de vérification, toute erreur donnant lieu à un marquage, de manière qu'après le découpage une bande de test comportant une erreur puisse être identifiée d'après sa marque.

3. Procédé selon l'une des revendications 1 ou 2, caractérisé en ce que la couche (20) de matériau pouvant être aimanté est appliquée sous la forme d'une bande magnétique préfabriquée fixée par collage ou par collage avec fusion.

4. Procédé selon l'une des revendications 1 à 3, caractérisé en ce que la couche (20) de matériau pouvant être aimanté est disposée à une certaine distance de la bande (16) de matériau constituant le champ de test, de préférence sur la surface de la bande (4) de matériau de support qui fait face au champ de test.

5. Procédé selon l'une des revendications 1 à 4, caractérisé en ce que deux têtes d'inscription (54) au moins inscrivent simultanément au moins deux traces magnétiques de l'ensemble des données dans le sens transversal par rapport à la direction de fabrication (6).

6. Procédé selon l'une des revendications 1 à 5, caractérisé en ce que l'inscription de l'ensemble de données et la lecture de l'ensemble de données antérieurement inscrites s'effectuent pendant que la bande totale est à l'arrêt.

7. Procédé selon l'une des revendications 1 à 6, caractérisé en ce que le déplacement de la tête d'inscription (54) pour l'inscription des données n'est pas linéaire et en ce que l'inscription est rythmée proportionnellement à la vitesse instantanée de la tête d'inscription.

8. Procédé selon l'une des revendications 1 à 7, caractérisé en ce que pendant l'inscription de l'ensemble de données, la bande (4) est poussée, de préférence par un dispositif pneumatique, dans la zone de la tête d'inscription utilisée pour l'inscription de l'ensemble de données contre une plaque de base (48) plane.

9. Procédé selon l'une des revendications 1 à 8, caractérisé en ce que la tête d'inscription (54) utilisée pour l'inscription de l'ensemble de données est montée sur un coulisseau (26) au moyen d'un élément élastique qui, d'une part, assure une orientation précise dans le sens transversal par rapport à la direction de fabrication (6) et, d'autre part, exerce une force de poussée déterminée sur la couche de la bande (4).

10. Bande de test pour la détermination par l'analyse de constituants de liquides organiques qui comporte un support plat de forme allongée comprenant une première et une deuxième extrémités, une première et une deuxième surfaces et au moins un champ de test à proximité de la première extrémité de la première surface, caractérisée en ce qu'elle comporte une couche de matériau pouvant être aimanté, constituée par une bande magnétique dans laquelle est inscrit, dans le sens de sa longueur, un ensemble de données servant à l'analyse de la bande de test et en ce que chacune de ses extrémités comporte un évidement réalisé de telle manière qu'il puisse être utilisé pour l'orientation et le positionnement de la bande de test pour les opérations d'analyse.

11. Bande de test selon la revendication 10, caractérisée en ce que la bande magnétique est appliquée par collage ou par collage avec fusion.

# FIG. 1

FIG. 2

EP 0 132 790 B1

# FIG.3

# FIG. 4

# FIG. 5

15